# EUROPEAN PATENT SPECIFICATION

(11) **EP 4 547 952 B1**
(45) Date of publication and mention of the grant of the patent: **01.07.2026**
(21) Application number: 23736486.4
(22) Date of filing: 29.06.2023
(51) Int. Cl.: F02D 41/14

(54) **COMBUSTION MODE CONTROL SYSTEM FOR DIESEL ENGINE**
VERBRENNUNGSMODUSSTEUERSYSTEM FÜR EINEN DIESELMOTOR
SYSTÈME DE COMMANDE DE MODE DE COMBUSTION POUR MOTEUR DIESEL

(30) Priority: 29.06.2022 NL 2032321
(43) Date of publication of application: 07.05.2025
(73) Proprietor: DAF Trucks N.V., 5643 TW Eindhoven (NL)
(72) Inventor: ALBRECHT, Bogdan Alexandru, 5643 TW Eindhoven (NL)
(74) Representative: V.O.
(86) International application number: PCT/NL2023/050356
(87) International publication number: WO 2024/005638

(56) References cited:
- EP-A1- 3 943 724
- JP-A- 2001 152 853
- US-B2- 8 943 807

## Description

### BACKGROUND OF THE INVENTION

The present invention relates to the field of diesel internal combustion engines with exhaust aftertreatment system, in particular for heavy load vehicles such as trucks. Trucks in general are used to transport heavy loads over long distances. Particularly in case of heavy duty long applications so-called tractor semi-trailer combinations are used in which the tractor vehicle pulls and partly supports the payload that is packed onto the semi-trailer.

Regulated emissions for diesel internal combustion engines include nitrogen oxides (NOx), particulate matter (PM), hydrocarbons (HC) and carbon monoxide (CO). The increasingly more stringent regulations result in the situation that the emission levels can only be met by means of a combination of improved combustion technologies and efficient exhaust aftertreatment systems (EAS).

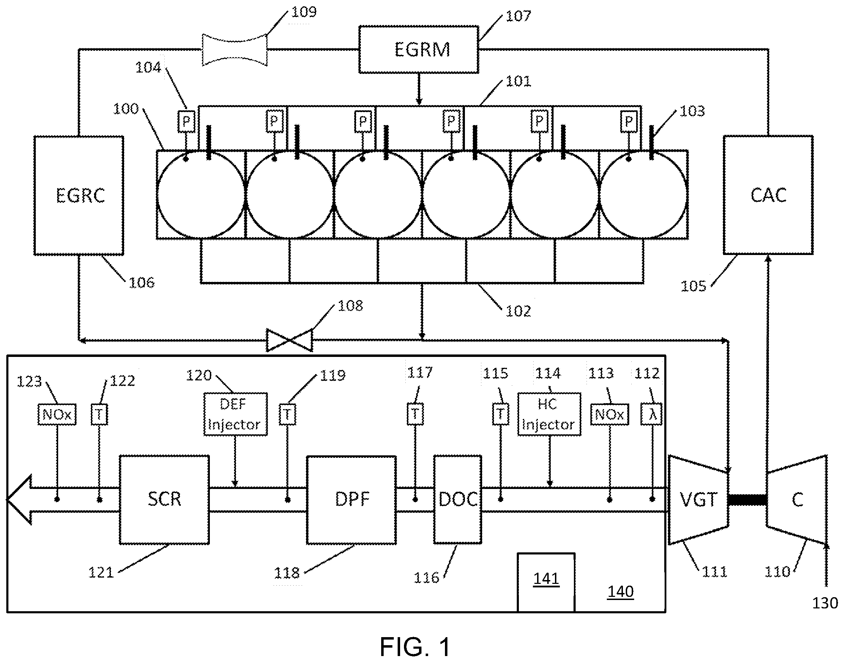

Conventional diesel exhaust gas aftertreatment systems include various components. With reference to Figure 1 this may at least include a selective catalytic reduction (SCR) catalyst, preferably in addition to a diesel oxidation catalyst (DOC) and diesel particulate filter (DPF). The DOC can be used to oxidize HC and CO and to convert NO to NO2, and may be used for passive regeneration of the DPF and to promote the fast conversion reactions of NOx in the SCR. The DPF may be used to remove PM from the exhaust gas and the SCR to convert NOx. In most cases, diesel exhaust fluid (DEF) is used as a reductant for the SCR system. This may be injected in the exhaust gas by means of a DEF injector, upstream of the SCR. The aftertreatment system typically contains also a HC injector, positioned upstream of the DOC. This is used to inject diesel which is subsequently oxidized in the DOC, with the purpose of increasing the temperature of the exhaust gas to assist the active regeneration of the DPF.

A known combustion mode is a 'premixed combustion mode', which is a special combustion mode wherein NOx generation is typically lower than in the normal combustion mode. One problem associated with this combustion mode is to control the combustion event when the premix condition is active, since engine conditions are difficult to control in a premixed combustion mode.

In contrast, a normal combustion mode is stable, and typically characterized by injection timing of fuel when a piston, at the end of a compression stroke nears top dead centre, under high pressure, so that ignition almost instantly occurs during fuel injection at the beginning of the combustion stroke by auto-ignition.

In the normal combustion mode, fuel may be additionally supplied even after ignition, so that a fuel supply amount into cylinders is increased, and high output can be secured. In the premixed combustion mode, however fuel injection is already finished before a fuel-autoignition timing so that ignition of the fuel mixture is slightly delayed, which helps to have an air-fuel mixture fully diluted and homogenized. This suppresses a local increase of combustion temperature and reduces a generation amount of NOx (nitrogen oxides).

Under optimal diesel engine temperature conditions and optimal working of the exhaust aftertreatment system, NOx emissions can be converted with maximum efficiency to O2 and N2 in the SCR. However, under non-optimal conditions (low exhaust temperatures or temporary sub-optimal working of the EAS system), if the SCR temperature or the SCR conversion efficiency are lower than certain threshold values, the NOx emissions may be converted with a lower efficiency in the SCR so that tailpipe NOx emissions run a risk of exceeding the legislated values. One way to solve this problem is to reduce the production of NOx by switching to a premixed combustion mode, involving a degree of air-fuel premixing before the onset of combustion. This premixed combustion mode, due to its partially premixed fuel mixture typically has lower NOx emissions. From US2009118978 it is known to switch a diesel engine between a so called normal, also known as a conventional, non-premixed combustion mode and a premixed combustion mode. It is an object of the present invention to provide an optimized premixed combustion mode to achieve in-cylinder NOx reduction when the SCR conversion efficiency appears insufficient, while at the same time keeping the combustion stable and the engine protected against high pressure rise rates accompanying uncontrolled premixed combustion. Another example for switching between normal and premixed combustion modes in NOx emissions control is US 8 943 807 B2.

### SUMMARY OF THE INVENTION

According to the invention, a truck or tractor semi-trailer combination comprises a diesel fuelled internal combustion engine, comprising
a diesel fuel injection system and an combustion mode control system, wherein the combustion mode control system selectively controls a diesel fuel injection in a normal combustion mode or a premix combustion mode; and an engine sensor system to register at least an in-cylinder pressure parameter and an engine speed parameter;
an engine after treatment system (EAS), at least comprising an selective catalytic reduction catalyst (SCR) and an EAS measurement module to register an exhaust NOx parameter and an exhaust temperature parameter, and output an SCR bed temperature parameter and an SCR conversion efficiency parameter;
said combustion mode control system further comprising a combustion mode selection module that selects a combustion mode on a basis of SCR bed temperature, SCR conversion efficiency, engine load parameter and engine speed; enabling a premix combustion mode when engine load parameter, engine speed, SCR bed temperature and SCR conversion efficiency are below preset values;
said combustion mode control system further comprising a combustion control module that optimizes a premix combustion mode on the basis of the measured tailpipe NOx parameter and the in-cylinder pressure parameter.

### BRIEF DESCRIPTION OF FIGURES

Fig. 1 shows a block diagram of a diesel engine with high pressure (HP) exhaust gas recirculation (EGR) system, turbocharger and exhaust aftertreatment system according to an exemplary embodiment;
Fig. 2 shows a block diagram of a diesel engine with low pressure (LP) EGR system, turbocharger and exhaust aftertreatment system according to a second exemplary embodiment;
Fig. 3 shows a diagram showing an EAS measurement module to provide combustion mode selection control parameters;
Fig. 4 shows a schematic layout of a combustion mode selection module, a combustion mode control module and a combustion optimization module.
Fig. 5 shows further illustration of a combustion control module, illustrating a method of defining a setpoints based combustion mode.
Fig. 6 shows a further illustration of a combustion optimization module showing a transition from a setpoints based premixed combustion to an optimized premixed combustion.
Fig. 7 shows an example diagram describing a premixed combustion optimization procedure.
Fig. 8 (A-B-C) shows exemplary control parameters for controlling a premixed combustion mode.

### DETAILED DESCRIPTION

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention.

Fig. 1 shows a block diagram of a diesel engine with high pressure (HP) exhaust gas recirculation (EGR) and exhaust aftertreatment system 140 according to an exemplary embodiment. In the Figure internal combustion engine 100 comprises an intake manifold 101 and an exhaust manifold 102.

Diesel injectors 103 provide fuel injection into cylinders of the engine 100. At least one, but preferably all cylinders are provided with a means to determine an in-cylinder pressure. This can be provided by a cylinder pressure transducer 104, which can be provided by means known in the art. In most embodiments the intake manifold 101 is provided with compressed and cooled intake are, by a turbocharger compressor (C) 110, which provides intake air from intake 130, to be cooled by charge air cooler (CAC) 105. A variable geometry turbine (VGT) 111 delivers work from the output gas flow to be used for compressing the intake air by turbocharger compressor 110.. Hydrocarbon (HC) injector 114 may be used to inject diesel in the exhaust gas, which is subsequently oxidized in the diesel oxidation catalyst (DOC) 116, with the purpose of increasing the temperature of the exhaust gas to assist the active regeneration of the diesel particulate filter (DPF) 118.

Furthermore, the engine typically has an exhaust gas recirculation cooler (EGRC) 106, to cool the EGR gas used to reduce the NOx during combustion by exhaust gas recirculation. From the EGRC 106 into an EGR mixer (EGRM) 107, controlled by EGR control valve 108. Typically an EGR flow meter 109 is present.

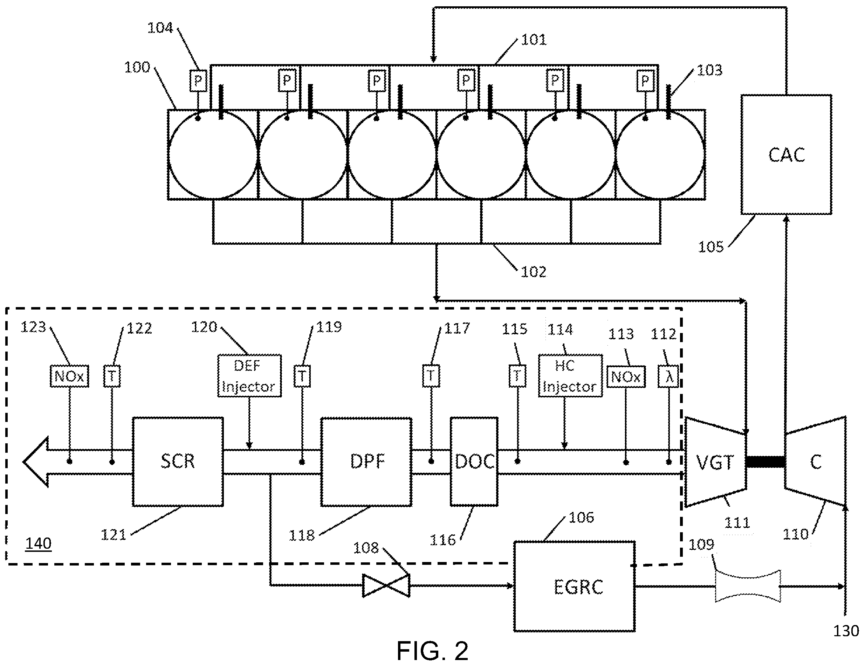

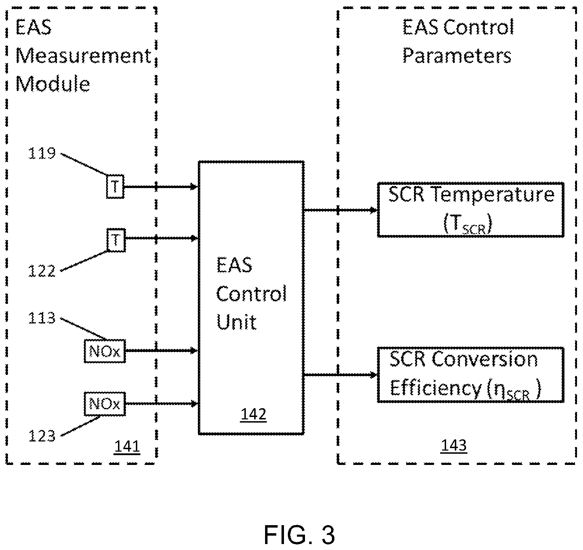

Alternatively in Figure 2 a low pressure EGR system is provided which differs by recirculating exhaust gas, just prior to entering the selective catalytic reduction (SCR) catalyst 121, e.g. from a branch-off position after diesel particulate filter 118 (DPF), into atmospheric pressure air intake 130, or at a point higher up in the air intake line. The values of the EAS control parameters, notably SCR temperature and SCR conversion efficiency are continuously evaluated in EAS control unit 142 (See Figure 3). A diesel exhaust fluid (DEF) injector 120 controls delivery of diesel exhaust fluid to the SCR catalyst, used to convert the NOx content of the exhaust gas in the SCR.

To this effect, in order to control the SCR conversion process, several temperature signals are registered e.g. from first exhaust temperature sensor 115, just before the DOC 116; second exhaust temperature sensor 117, just after the DOC 116; third exhaust temperature sensor 119, just before the SCR catalyst 121 and fourth exhaust temperature sensor 122 just after the SCR catalyst 121. In addition, NOx input signals are registered, in particular from a first NOx sensor 113 just after the VGT turbine 111, where also a lambda sensor 112 can be provided, and a second NOx sensor 123 which measures a tailpipe out fraction of NOx.

Figure 3 is a diagram showing the EAS measurement module 141 to provide combustion mode selection control parameters for an EAS control unit 142. To this end measurement module 141 at least registers an exhaust NOx parameter, and is arranged to output an SCR bed temperature parameter and an SCR conversion efficiency parameter. The SCR bed temperature can be derived, in a way known by the skilled person, e.g. from temperature measurements of temperature sensors in the exhaust flow path before and after the SCR catalyst 121. In addition, an SCR conversion efficiency parameter can be derived from a measurement of the NOx sensors in the flow path before and after the SCR catalyst 121. Such calculations are provided in EAS control unit 142, that may be part of a general engine control unit 150, which also serves to optimize the EAS control e.g. by controlling the HC injector 114, DOC 116 and DEF injector 120. For the purpose of the present invention, EAS control unit 142 is arranged to output EAS control parameters, in particular the SCR temperature and SCR conversion efficiency, as output 143.

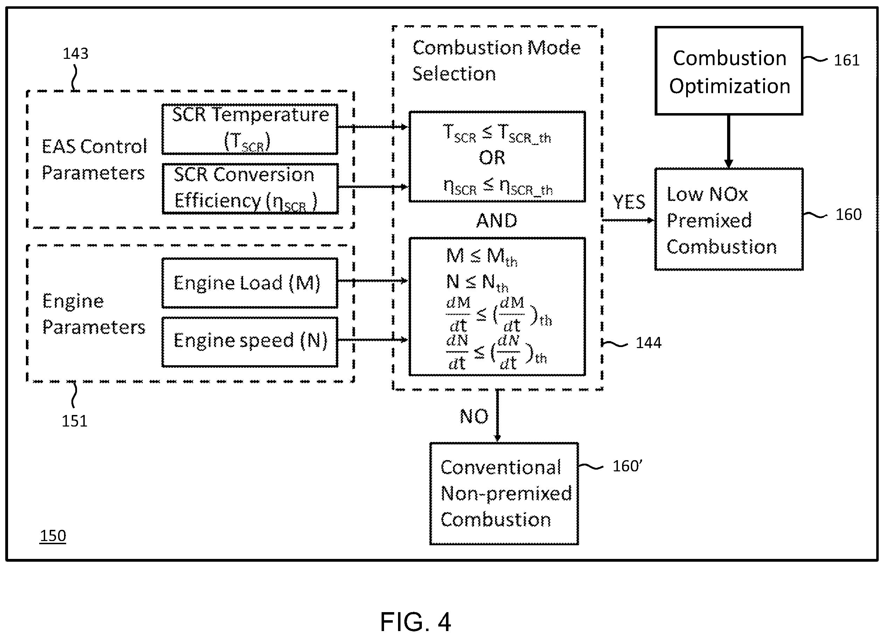

Figure 4 shows a combustion mode control system 150 wherein EAS control parameters values 143 are subsequently received by combustion mode selection module 144, which may also be part of a general engine control unit. From the combustion mode control system 150 or suitable other controller an engine load parameter (M) and engine speed parameter (N) are derived and inputted into the combustion mode selection module 144. The combustion mode selection module 144 selects a combustion control mode (premixed combustion control mode 161 or conventional combustion control mode 162) on a basis of EAS control parameters 143, in particular, SCR bed temperature, SCR conversion efficiency; and engine parameters 151, notably engine load and engine speed. A premix combustion control mode 160 is enabled when engine load; engine speed; SCR bed temperature and SCR conversion efficiency are below preset threshold values; otherwise a conventional combustion control mode 160' is enabled. Accordingly, if the SCR temperature or the SCR conversion efficiency is below a certain threshold value and the engine load and speed satisfy a set of conditions, as illustrated in Fig. 4, the combustion mode may be changed from conventional non-premixed combustion to a premixed combustion that has a low engine out NOx exhaust. Engine control unit 150 further comprises a combustion optimization module 161 that optimizes a premix combustion mode to keep the combustion conditions of the engine stable; or may eventually switch to a conventional combustion mode.

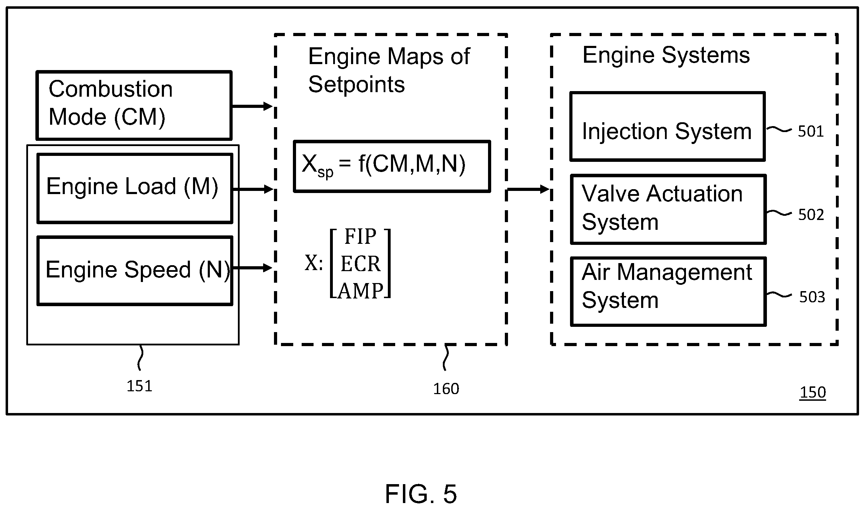

Figure 5 shows a further illustration of the combustion control module 160, which may be part of an engine control unit 150, which may operate by selecting, based on output of the combustion mode selection module 144 and based on engine parameters 151 (engine load (M) and engine speed (N)) for each combustion mode (conventional or premixed) respective setpoints for fuel injection parameters FIP (number and timing of injections and injection pressure), effective compression ratio (ECR) and air management parameters AMP (EGR rate and temperature and AFR). These can be based on pre-calibrated engine maps, as functions of the combustion mode CM (Conventional non-premixed combustion or Low-NOx premixed combustion) and engine load M and speed N (see Fig. 4). Subsequently, the setpoints information is sent to the Injection System 501, Valve Actuation System 502 and Air Management System 503 as part of engine control unit 150 and via corresponding engine actuators a desired setpoints based combustion mode is achieved that may be a conventional or premixed combustion mode, based on a respective engine map of combustion control module160.

To achieve a desired Low-NOx High-efficiency Premixed Combustion Mode, a corresponding matching injection strategy, effective compression ratio and charge composition and temperature are pre-calibrated and the resulting setpoints for FIP, CR and AMP parameters are stored in engine maps, of combustion control module 160 as illustrated in Fig. 5. A respective engine map in combustion control module 160 may adjust a fuel-air degree of premixedness, effective compression ratio (ECR) and in-cyl. charge composition and temperature. When enabling the alternative Low-NOx premixed combustion mode, injection system 501 can be controlled to achieve an injection fuel injection time, valve actuation system 502 can be controlled to achieve a valve timing and air management system 503 can be controlled to provide air management measures that are employed to achieve the optimum combination of in-cylinder level of premix, effective compression ratio and in-cylinder charge composition, based on a respective premixed engine map of setpoints. E.g., an injection strategy may consist of a number of injection pulses that can be used to achieve the desired level of air-fuel premix in the cylinder. An injection timing and pressure for these pulses may be chosen in such a way to obtain a partially-premixed air-fuel mixture prior to combustion onset. The injection timing of the first injection pulse is usually sooner than that corresponding to the conventional non-premixed diesel combustion and the injection pressure is lower than that of the conventional non-premixed combustion. Secondly, a variable valve actuation system is used to achieve a variable effective compression ratio, matching a degree of premixedness in the cylinder. The objective is to lower the geometric compression ratio and this way to control the ignition timing to achieve an optimal combustion timing. Also, air/fuel ratio AFR and EGR flow may be controlled by means of the VGT and EGR valve actuators to achieve a desired in-cylinder charge dilution. The AFR control may make use of a lambda sensor (112) or a model based approach to determine the current AFR value, while the EGR flow is measured using an EGR flow meter (109) (see Fig 1).

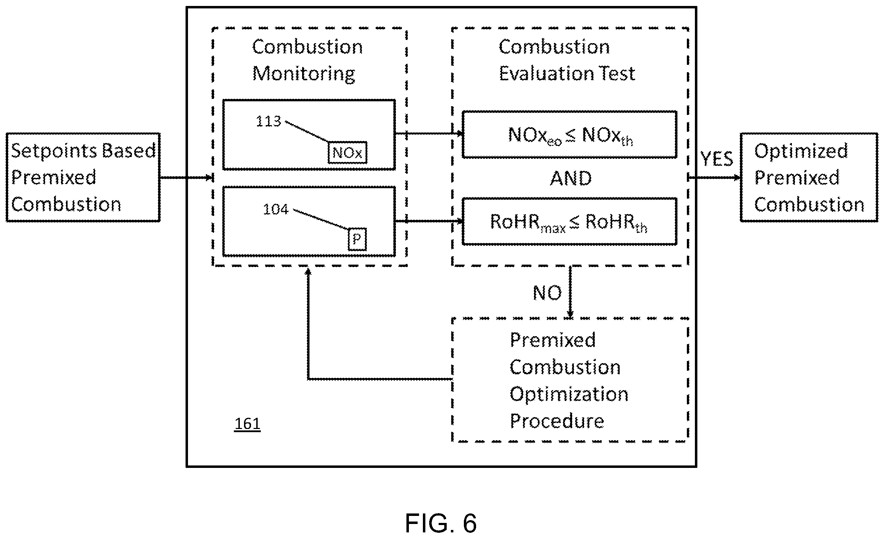

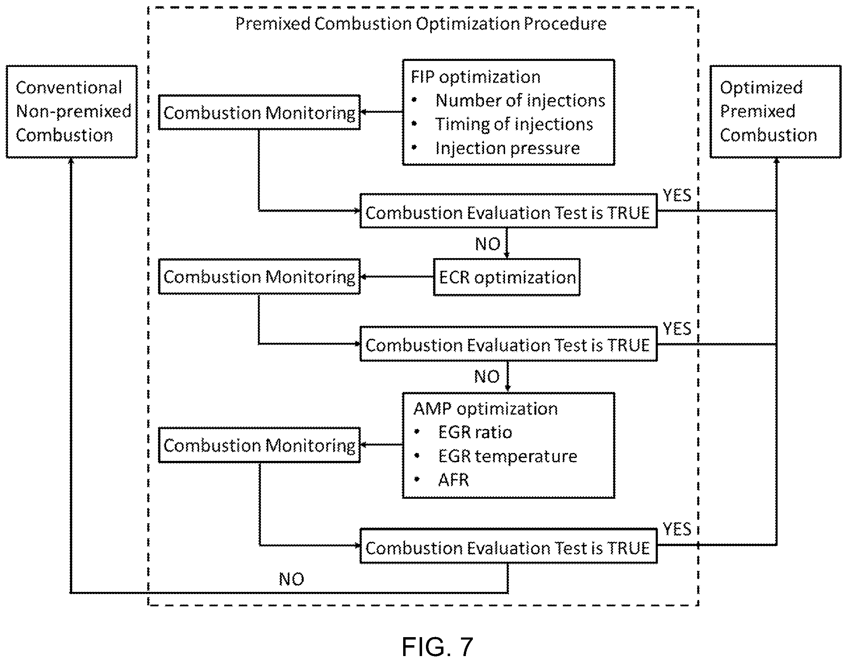

Figure 6 shows a further detail of a combustion optimization module 161 that optimizes a premix combustion mode on the basis of the measured exhaust NOx parameter 113 and the in-cylinder pressure parameter 104 as also further exemplified in a control scheme shown in Figure 7. For example, combustion mode optimization module 161 iteratively adjusts, in consecutive order, fuel injection parameters (FIP), an effective compression ratio (ECR), and air management parameters (AMP) in response to monitoring measured NOx and RoHR values. If under specific operating conditions, a premixed combustion mode that is based on corresponding engine parameter setpoints from combustion control module 160 is monitored to result in a too high NOx level, with a measured NOx level that is higher than a calibrated threshold for a premixed combustion control value, or in a too high maximum high rate of heat release (RoHR) with a measured RoHR that is higher than the maximum allowable calibrated threshold premixed level (RoHR_max), combustion optimization module system initiates an additional premixed combustion optimization, which may consist of an iterative process of adjusting the injection parameters FIP, ECR and air management parameters AMP while monitoring the NOx and RoHR_max values. For example, combustion mode optimization module may adjust the fuel injection parameters by changing a number of injections, a timing of injections prior to top dead center (TDC), and an injection pressure. Also, combustion mode optimization module 161 may adjust the air management parameters by changing an EGR ratio, an EGR temperature or an air/fuel ratio (AFR). This process continues until the desired optimal premixed combustion mode is achieved, characterized by a NOx level lower than or equal to the calibrated threshold premixed NOxth and a RoHRmax lower than or equal to the calibrated threshold premixed value RoHRth.

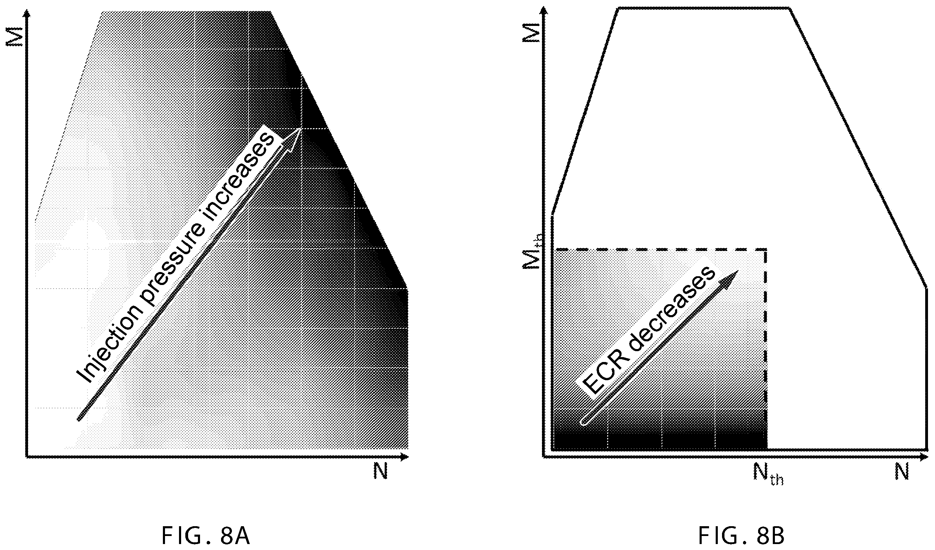

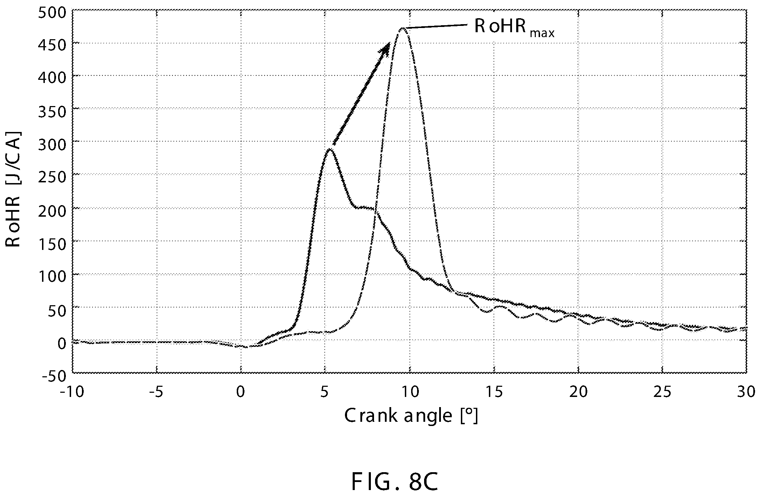

Fig. 8 shows exemplary control parameters for controlling a premixed combustion mode as an illustration of the information contained in the engine maps of setpoints for the Conventional Non-Premixed Combustion Mode. The fuel injection pressure parameter is shown as an example in Fig 8a showing that a setpoints based injection pressure will increase with increasing engine speed and engine load. In an optimization routine for example, combustion mode optimization module may adjust an injection pressure to a lower level.

Fig. 8b shows an illustration of the information contained in the engine maps of setpoints for premixed combustion mode. The effective compression ratio (ECR) parameter is shown as an example. The range of the Premixed Combustion Mode is also shown, being delimited by Mth and Nth, within a typical engine map of a diesel engine. Furthermore it is shown that a setpoints based effective compression ratio decreases with increasing engine speeds and loads. In an optimization routine a premix combustion mode can be optimized by lowering a geometric compression ratio if the in-cylinder pressure parameter (RoHR) exceeds a preset threshold value.

Fig. 8c shows a comparison of the rate of heat release (RoHR) corresponding to a low-NOx Premixed Combustion Mode with that corresponding to the Conventional Non-premixed Combustion Mode. The maximum value of the rate of heat release (RoHRmax) is also shown; this is one of the two parameters used in the Combustion Evaluation Test, as illustrated in Fig 6.

### List of abbreviations and symbols

NOx: nitrogen oxides, consisting of NO and NO2;
NO: nitrogen monoxide;
NO2: nitrogen dioxide;
PM: particulate matter;
HC: hydrocarbons;
CO: carbon monoxide;
DOC: diesel oxidation catalyst;
DPF: diesel particulate filter;
SCR: selective catalytic reduction catalyst;
DEF: diesel exhaust fluid;
HP: high pressure;
EGR: exhaust gas recirculation;
EAS: engine aftertreatment system;
RoHR: rate of heat release;
LP: low pressure;
TDC: top dead center;
O2: oxygen;
N2: nitrogen;
M: engine load;
N: engine speed;
FIP: fuel injection parameters, consisting of number of injections, timing of injections and injection pressure;
ECR: effective compression ratio. This is a variable compression ratio which is varied by means of a variable valve actuation system based on variable IVC timing;
IVC: inlet valve closing;
AMP: air management parameters, consisting of EGR rate, EGR temperature and AFR;
AFR: air-fuel ratio;
CM: combustion mode, namely Conventional Non-premixed Combustion or Low-NOx Premixed Combustion
RoHRmax: maximum rate of heat release;
NOxth: calibratable threshold value of NOx;
RoHRth: calibratable threshold value of RoHR;
TSCR: SCR temperature;
ηSCE: SCR conversion efficiency;
TSCR_th: calibratable threshold value of SCR temperature;
nSCE_th: calibratable threshold value of SCR conversion efficiency;
Mth: calibratable threshold value of engine load;
Nth: calibratable threshold value of engine speed;
dM/dt: change of engine load in time;
dN/dt: change of engine speed in time;
(dM/dt)_th: calibratable threshold value of change of engine load in time;
(dN/dt)_th: calibratable threshold value of change of engine speed in time;
NOxeo: engine-out NOx value;
NOxth: calibratable threshold NOx value;
Xsp: matrix of setpoint values of parameters X; X stands for FIP, ECR and AMP parameters;
f(CM,M,N): setpoint functions containing the dependence of the setpoints Xsp on CM, M and N, stored in engine maps;

It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim. The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such. Additions, deletions, and modifications within the purview of the skilled person may generally be made without departing from the scope of the invention, as determined by the claims.

## Claims

1. A truck or tractor semi-trailer combination comprising a diesel fuelled internal combustion engine, comprising
- a diesel fuel injection system; a combustion mode control system, wherein the combustion mode control system selectively controls a diesel fuel injection in a normal combustion mode or a premix combustion mode; and an engine sensor system to register at least an in-cylinder pressure parameter and an engine speed parameter;
- an engine after treatment system (EAS), at least comprising an selective catalytic reduction catalyst (SCR); and an EAS measurement module to register an exhaust NOx parameter and an exhaust temperature parameter, and output an SCR bed temperature parameter and an SCR conversion efficiency parameter;
- said combustion mode control system further comprising a combustion mode selection module that selects a combustion control mode on a basis of SCR bed temperature, SCR conversion efficiency, engine load parameter and engine speed; enabling a premix combustion mode when engine load parameter, engine speed, SCR bed temperature and SCR conversion efficiency are below respective preset threshold values;
- said combustion mode control system further comprising a combustion optimization module that optimizes a premix combustion mode on the basis of the measured exhaust NOx parameter and the in-cylinder pressure parameter.

2. A truck or tractor semi-trailer combination according to claim 1, wherein the combustion optimization module is arranged to calculate if the measured exhaust NOx parameter and in-cylinder pressure parameter are below preset threshold values in the premix combustion mode, and if the in-cylinder pressure exceeds the preset threshold value, optimize a premix combustion mode by lowering a geometric compression ratio.

3. A truck or tractor semi-trailer combination according to claim 2, wherein a premix combustion mode is optimized by adjustment of a fuel injection parameter or an air management parameter.

4. A truck or tractor semi-trailer combination according to any preceding claim, further comprising an engine after treatment control unit, controlling the engine after treatment system and receiving said exhaust NOx parameter an exhaust temperature parameter from said engine after treatment measurement module; and output an SCR bed temperature parameter based on temperature measured bya temperature sensor upstream and a temperature sensor downstream of the SCR; and an SCR conversion efficiency parameter based on a NOx measured by a NOx sensor upstream and by a NOx sensor downstream of the SCR.

5. A truck or tractor semi-trailer combination according to any preceding claim, wherein the combustion mode selection module enables a premix combustion mode when engine load parameter variation and engine speed variation are below respective preset threshold values.

6. A truck or tractor semi-trailer combination according to any preceding claim, wherein the combustion mode optimization module iteratively adjusts, in consecutive order, fuel injection parameters (FIP), an effective compression ratio (ECR), and air management parameters (AMP) in response to monitoring measured NOx and rate of heat release (RoHR) values.

7. A truck or tractor semi-trailer combination according claim 6, wherein the combustion mode optimization module adjusts the fuel injection parameters by changing a number of injections, a timing of injections prior to top dead center (TDC), and an injection pressure.

8. A truck or tractor semi-trailer combination according to claim 6 or 7, wherein the combustion mode optimization module adjusts the air management parameters by changing an EGR ratio, an EGR temperature or an air/fuel ratio (AFR).

## Patentansprüche

1. Lkw- oder Traktor-Sattelzugkombination mit einem dieselbetriebenen Verbrennungsmotor, umfassend
- ein Dieselkraftstoffeinspritzsystem; ein Verbrennungsmodus-Steuersystem, wobei das Verbrennungsmodus-Steuersystem selektiv eine Dieselkraftstoffeinspritzung in einem normalen Verbrennungsmodus oder einem Vormischverbrennungsmodus steuert; und ein Motorsensorsystem zum Erfassen mindestens eines Zylinderinnendruckparameters und eines Motordrehzahlparameters;
- ein Motor-Nachbehandlungssystem (Engine After Treatment System, EAS), das mindestens einen selektiven katalytischen Reduktionskatalysator (Selective Catalytic Reduction, SCR) umfasst; und ein EAS-Messmodul zum Erfassen eines Abgas-NOx-Parameters und eines Abgastemperaturparameters und zum Ausgeben eines SCR-Betttemperaturparameters und eines SCR-Umwandlungswirkungsgradparameters;
- wobei das Verbrennungsmodus-Steuersystem ferner ein Verbrennungsmodus-Auswahlmodul umfasst, das einen Verbrennungssteuerungsmodus auf der Grundlage der SCR-Betttemperatur, des SCR-Umwandlungswirkungsgrades, des Motorlastparameters und der Motordrehzahl auswählt; wobei ein Vormischverbrennungsmodus aktiviert wird, wenn der Motorlastparameter, die Motordrehzahl, die SCR-Betttemperatur und der SCR-Umwandlungswirkungsgrad unter den jeweiligen voreingestellten Schwellenwerten liegen;
- wobei das Verbrennungsmodus-Steuersystem ferner ein Verbrennungsoptimierungsmodul umfasst, das einen Vormischverbrennungsmodus auf der Grundlage des gemessenen Abgas-NOx-Parameters und des Zylinderinnendruckparameters optimiert.

2. Lkw- oder Traktor-Sattelzugkombination nach Anspruch 1, wobei das Verbrennungsoptimierungsmodul so ausgelegt ist, dass es berechnet, ob der gemessene Abgas-NOx-Parameter und der Zylinderinnendruckparameter im Vormischverbrennungsmodus unter voreingestellten Schwellenwerten liegen, und wenn der Zylinderinnendruck den voreingestellten Schwellenwert überschreitet, einen Vormischverbrennungsmodus durch Verringern eines geometrischen Verdichtungsverhältnisses optimiert.

3. Lkw- oder Traktor-Sattelzugkombination nach Anspruch 2, wobei ein Vormischverbrennungsmodus durch Anpassung eines Kraftstoffeinspritzparameters oder eines Luftmanagementparameters optimiert wird.

4. Lkw- oder Traktor-Sattelzugkombination nach einem der vorstehenden Ansprüche, die ferner eine Motor-Nachbehandlungs-Steuereinheit umfasst, die das Motor-Nachbehandlungssystem steuert und den Abgas-NOx-Parameter und einen Abgastemperaturparameter von dem Motor-Nachbehandlungs-Messmodul empfängt; und einen SCR-Betttemperaturparameter auf der Grundlage der von einem Temperatursensor stromaufwärts und einem Temperatursensor stromabwärts des SCR gemessenen Temperatur ausgibt; und einen SCR-Umwandlungswirkungsgradparameter auf der Grundlage eines NOx-Wertes, der von einem NOx-Sensor stromaufwärts und einem NOx-Sensor stromabwärts des SCR gemessen wird.

5. Lkw- oder Traktor-Sattelzugkombination nach einem der vorstehenden Ansprüche, wobei das Verbrennungsmodus-Auswahlmodul einen Vormischverbrennungsmodus aktiviert, wenn die Änderung des Motorlastparameters und die Änderung der Motordrehzahl unter den jeweiligen voreingestellten Schwellenwerten liegen.

6. Lkw- oder Traktor-Sattelzugkombination nach einem der vorstehenden Ansprüche, wobei das Verbrennungsmodus-Optimierungsmodul iterativ in aufeinanderfolgender Reihenfolge die Kraftstoffeinspritzparameter (Fuel Injection Parameter, FIP), ein effektives Verdichtungsverhältnis (Effective Compression Ratio, ECR) und Luftmanagementparameter (Air Management Parameter, AMP) als Reaktion auf die Überwachung der gemessenen NOx- und Wärmefreisetzungsratenwerte (Rate of Heat Release, RoHR) anpasst.

7. Lkw- oder Traktor-Sattelzugkombination nach Anspruch 6, wobei das Verbrennungsmodus-Optimierungsmodul die Kraftstoffeinspritzparameter durch Ändern einer Anzahl von Einspritzungen, eines Zeitpunkts der Einspritzungen vor dem oberen Totpunkt (top dead center, TDC) und eines Einspritzdrucks anpasst.

8. Lkw- oder Traktor-Sattelzugkombination nach Anspruch 6 oder 7, wobei das Verbrennungsmodus-Optimierungsmodul die Luftmanagementparameter durch Ändern eines EGR-Verhältnisses, einer EGR-Temperatur oder eines Luft/Kraftstoff-Verhältnisses (Air/Fuel Ratio, AFR) anpasst.

## Revendications

1. Combinaison camion ou tracteur semi-remorque comprenant un moteur à combustion interne à carburant diesel, comprenant
- un système d'injection de carburant diesel; un système de commande de mode de combustion, dans lequel le système de commande de mode de combustion commande sélectivement une injection de carburant diesel dans un mode de combustion normal ou un mode de combustion à prémélange; et un système de capteur de moteur pour enregistrer au moins un paramètre de pression dans le cylindre et un paramètre de régime du moteur;
- un système de post-traitement du moteur (EAS), comprenant au moins un catalyseur de réduction catalytique sélective (SCR); et un module de mesure EAS pour enregistrer un paramètre de NOx d'échappement et un paramètre de température d'échappement, et produire un paramètre de température de lit de SCR et un paramètre d'efficacité de conversion de SCR;
- ledit système de commande de mode de combustion comprenant en outre un module de sélection de mode de combustion qui sélectionne un mode de commande de combustion sur la base de la température de lit de SCR, de l'efficacité de conversion de SCR, du paramètre de charge du moteur et du régime du moteur; activant un mode de combustion à prémélange lorsque le paramètre de charge du moteur, le régime du moteur, la température du lit de SCR et l'efficacité de conversion de SCR sont inférieurs à des valeurs seuils prédéfinies respectives;
- ledit système de commande de mode de combustion comprenant en outre un module d'optimisation de la combustion qui optimise un mode de combustion à prémélange sur la base du paramètre de NOx d'échappement mesuré et du paramètre de pression dans le cylindre.

2. Combinaison camion ou tracteur semi-remorque selon la revendication 1, dans laquelle le module d'optimisation de la combustion est agencé pour calculer si le paramètre de NOx d'échappement mesuré et le paramètre de pression dans le cylindre sont inférieurs à des valeurs seuils prédéfinies dans le mode de combustion à prémélange, et si la pression dans le cylindre dépasse la valeur seuil prédéfinie, optimiser un mode de combustion à prémélange en abaissant un taux de compression géométrique.

3. Combinaison camion ou tracteur semi-remorque selon la revendication 2, dans lequel un mode de combustion à prémélange est optimisé par le réglage d'un paramètre d'injection de carburant ou d'un paramètre de gestion de l'air.

4. Combinaison camion ou tracteur semi-remorque selon l'une quelconque des revendications précédentes, comprenant en outre une unité de commande de post-traitement du moteur, commandant le système de post-traitement du moteur et recevant ledit paramètre de NOx d'échappement un paramètre de température d'échappement dudit module de mesure de post-traitement du moteur; et produisant un paramètre de température du lit de SCR basé sur la température mesurée par un capteur de température en amont et un capteur de température en aval de SCR; et un paramètre d'efficacité de conversion de SCR basé sur un NOx mesuré par un capteur de NOx en amont et par un capteur de NOx en aval de SCR.

5. Combinaison camion ou tracteur semi-remorque selon l'une quelconque des revendications précédentes, dans laquelle le module de sélection du mode de combustion active un mode de combustion à prémélange lorsque la variation de paramètre de charge du moteur et la variation de régime du moteur sont inférieures à des valeurs seuils prédéfinies respectives.

6. Combinaison camion ou tracteur semi-remorque selon l'une quelconque des revendications précédentes, dans laquelle le module d'optimisation du mode de combustion ajuste itérativement, dans un ordre successif, des paramètres d'injection de carburant (FIP), un taux de compression effectif (ECR) et des paramètres de gestion de l'air (AMP) en réponse à la surveillance des valeurs de NOx et du taux de dégagement de chaleur (RoHR) mesurées.

7. Combinaison camion ou tracteur semi-remorque selon la revendication 6, dans laquelle le module d'optimisation du mode de combustion ajuste les paramètres d'injection de carburant en modifiant un nombre d'injections, un moment d'injections avant le point mort haut (TDC) et une pression d'injection.

8. Combinaison camion ou tracteur semi-remorque selon la revendication 6 ou 7, dans laquelle le module d'optimisation du mode de combustion ajuste les paramètres de gestion de l'air en modifiant un taux de EGR, une température de EGR ou un rapport air/carburant (AFR).
